# EUROPEAN PATENT SPECIFICATION

(11) **EP 1 239 470 B1**
(45) Date of publication and mention of the grant of the patent: **18.04.2007**
(21) Application number: 02290391.8
(22) Date of filing: 18.02.2002
(51) Int. Cl.: G11B 15/61, G11B 25/06

(54) **Laser welding for drum base**
Laserschweissen für Trommelbasis
Soudage par laser pour base de tambour

(30) Priority: 01.03.2001 EP 01400546
(43) Date of publication of application: 11.09.2002
(73) Proprietor: Thomson Licensing, 92100 Boulogne-Billancourt (FR)
(72) Inventor: Berthaud, Philippe, 89700 Tonnerre (FR); Perrot, Michel, 89700 Tonnerre (FR)
(74) Representative: Arnold, Klaus-Peter

(56) References cited:
- EP-A- 0 944 042
- DE-A- 3 505 362
- US-A- 4 692 822
- US-A- 5 459 625
- US-A- 6 078 464
- PATENT ABSTRACTS OF JAPAN vol. 018, no. 587 (P-1824), 10 November 1994 (1994-11-10) -& JP 06 215453 A (SONY CORP), 5 August 1994 (1994-08-05)
- PATENT ABSTRACTS OF JAPAN vol. 009, no. 161 (P-370), 5 July 1985 (1985-07-05) -& JP 60 038703 A (RICOH KK), 28 February 1985 (1985-02-28)

## Description

This invention relates generally to rotary drums of tape recorders for recording and/or reproducing signals according to helical scan system and, more particularly, to an assembly of the rotary drum.

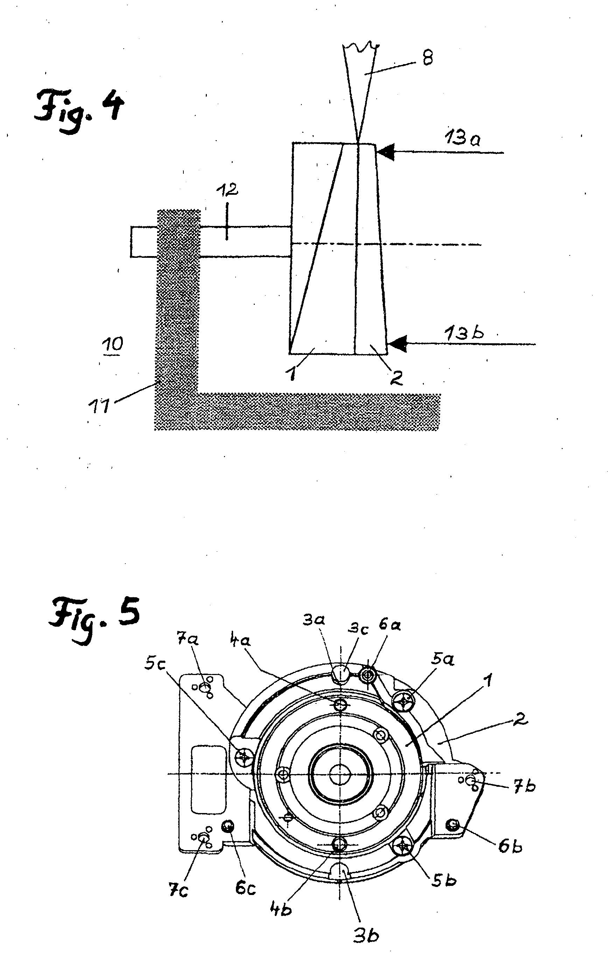

As is well known from video recorders, the rotary drum comprises a rotary part (upper drum) and a stationary part (lower drum), and forms a drum unit with a so-called drum base by means of which the drum is being arranged with a tilt angle with respect to the plane of recorder's tape deck chassis. For joining drum and drum base together, screw joints (as, for example, illustrated in Fig. 5) between drum base and the lower drum have been proved to be very worthwhile.

According to another solution, the tilt angle can be also realized by stamping the tape deck chassis accordingly. This solution is cheaper as it facilitates mounting the drum directly on the tape deck chassis, i.e. without the drum base mentioned before. This solution, however, has the drawback to be less accurate.

Documents JP 06215453 A and DE 3505362 A both disclose examples of rotary drums according to the preamble of claim 1.

It is object of the present invention to provide a solution which is economical and which facilitates to mount the drum accurately.

This object is solved by a drum unit as specified in claim 1. Advantageous embodiments are specified in the subclaims.

The present invention is based on the idea to join lower drum and drum base together by welding, particularly by means of laser welding. This solution simplifies assembly of lower drum and drum base, called lower drum assembly in the following.

As, according to the present invention, screw joints between drum base and the lower drum are not needed, screws can be saved and thus, drilling of tapped holes as well as screw holes can be avoided. Another benefit of this invention is that a machining regarding surface finish of the drum base and the lower drum for fitting them together (before assembling) is no more necessary and thus can be dispensed with.

Furthermore, measures may be provided to facilitate assembly procedure of the lower drum assembly which, particularly, can be realized by simple mouldings within lower drum and/or drum base.

Hence, costs of manufacturing drum units are greatly reduced.

The present invention will now be described in more detail with reference to the accompanying drawing which shows in:
- Fig. 1: a plan view of a drum base of a lower drum assembly according to the first and/or the second embodiment of the invention;
- Fig. 2: a) a plan view of the lower drum assembly according to the first embodiment of the invention, and
b) a sectional illustration of a detail;
- Fig. 3: a plan view of the lower drum assembly according to the second embodiment of the invention, and
b) a sectional illustration of a;
- Fig. 4: a welding jig; and
- Fig. 5: a lower drum assembly according to prior art.

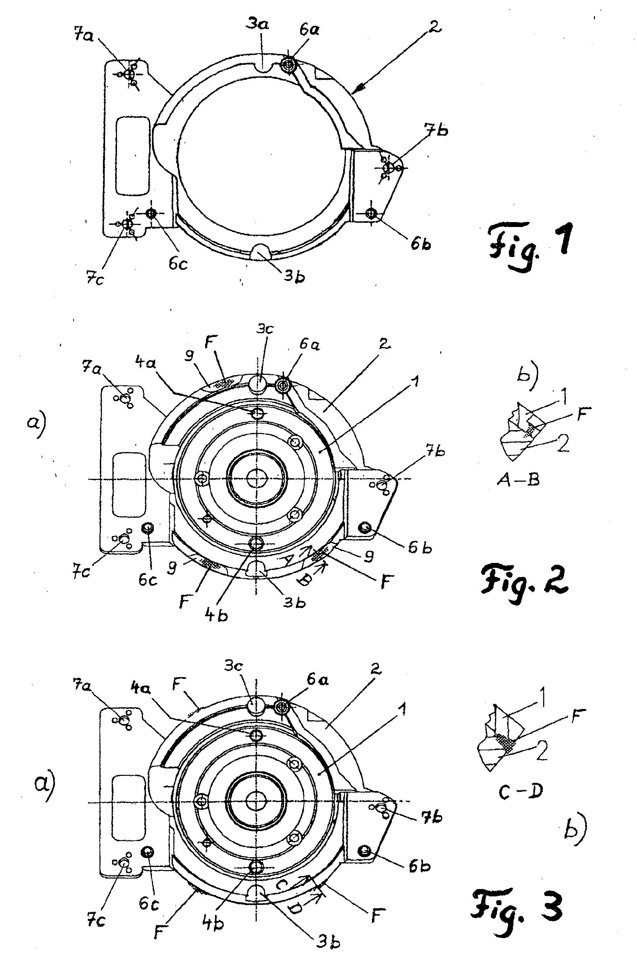

It should be pointed out initially that throughout the Figures 1-5 identical or equivalent elements/parts are designated with the same reference numerals or letters for sake of simplicity of the explanation.

Fig. 5 shows a schematic illustration of a lower drum assembly according to prior art used in a rotary drum unit of a tape recorder for recording and/or reproducing signals according to helical scan system. Fig. 5 is a bottom view, i.e. looking from the tape deck chassis (not shown) of the recorder, of the lower drum assembly. Lower drum 1 and drum base 2 are joined together by three screw joints being arranged close to the circumference of lower drum 1 assembly. As can be taken from this figure, to facilitate assembly procedure of lower drum 1 and drum base 2 there are provided indexing holes 3a, 3b and an indexing pin 3c as well as other holes 4a, 4b to position lower drum 1 with respect to the drum base 2 and fit them together, respectively, before joining them together by means of screws 5a - 5c which are screwed into the lower drum 1.

The drum base 2 has positioning pins 6b - 6c for engaging corresponding holes of the tape deck chassis and a pin 6a for engaging a corresponding hole of an electronic board (not shown), and, furthermore, the lower drum base 2 has holes 7a - 7c for screw joints (not shown) of the drum base 2 with the tape deck chassis when the drum unit is arranged on the tape deck chassis.

Fig. 1 is a schematic illustration of a drum base 2 to be used for lower drum assemblies according to a first (Fig. 2) and a second (Fig. 3a) embodiment of the present invention. In contrast to the lower drum assembly according to the prior art, the drum base 2 of the first and the second embodiment, respectively, does not need any screw joints of the drum base 2 with the lower drum 1 because they are joined together by welding, particularly by means of laser welding (Fig. 4). However, the same material can be used, i.e. preferably conventional material like aluminium alloy.

For lower drum assemblies - according to the present invention by welding lower drum 1 on drum base 2 and vice versa, respectively - it is advantageous when the same aluminium alloy is used for each part, notably, to have a similar melting temperature. For example, aluminium alloys according to type ADC12 (Japanese norm) or according to type AS9U3 have been proved (European norm) to be well suited. But also a combination of both, i.e. one part is of ADC12 and the other part is of AS9U3, has been proved to be suitable, too.

Fig. 2 and Fig. 3 illustrate the principle for two preferred embodiments of lower drum assembly according to the present invention, wherein a) is a bottom view of the respective lower drum assembly and b) a sectional view according to the intersection line A-B and C-D, respectively, showing welding areas F as the result of the laser welding. The welding areas F are depicted by dotted areas.

The first (Fig. 2) and the second (Fig. 3) embodiment can be distinguished from one another by the method how a corresponding laser beam 8 is applied. These methods are herein called "through-welding" and "side-welding", respectively. The first embodiment (Fig. 2) uses the method "through-welding", whereas the second embodiment (Fig. 3) uses the method "side-welding". The methods will be described now:

### 1. "through-welding"

The laser beam 8 is applied, for example, to the lower side of the drum base 2, called looking-down surface in the following. The alloy melts up to the upper surface of the drum base 2 and even on the lower surface of the lower drum 1. Welding is thus realized.

For facilitating the welding process the looking-down surface of the drum base 2 is provided with regions 9 of reduced thickness where the laser beam 8 is to be applied.

### 2. "side-welding"

The laser beam 8 is applied in a predetermined radial manner so that the alloys melt together accordingly at certain areas F at the circumference of the lower drum assembly where the drum base 2 and the lower drum 1 abut.

Fig. 4 shows with a schematic illustration the principle of a welding jig 10 used for the lower drum assembly procedure according to the present invention. The welding jig 10 essentially comprises a holder 11 and a shaft 12. The shaft 12 is similar to drum's driving shaft but, in this case, used as a facility to arrange lower drum 1 and drum base 2 in connection with a drum base fixation jig (not shown). As it is illustrated by means of arrows 13a, 13b the drum base fixation jig engages with the drum base 2 in a defined manner in order to fit and press drum base 2 and lower drum 1 together before joining them together by welding due to the respective application of the laser beam 8: According to the method "through-welding", the laser beam 8 is applied square to the so-called looking-down surface of the drum base 2, and according to the method "side-welding", the laser beam 8 is radially applied as depicted in Fig.4, for example.

To avoid deforming the drum, it has to be considered that drum base 2 and lower drum 1 are fitted together closely during the laser welding process, particularly with regard to mass production line. This is achieved by uniform flatness of the upper surface of drum base 2 and the lower surface of lower drum 1 where drum base 2 and lower drum 1 abut so that both the drum base 2 and the lower drum 1 are very close to one another.

For generation of the laser beam 8, there can be used a laser type according to HAAS HPL 62P (from HAAS LASER), for example. A laser beam 8 having a beam diameter 1 mm and a beam angle 76°, for example, has been proved to be suitable.

## Claims

1. Rotary drum for a tape recorder for recording and/or reproducing signals according to a helical scan system, comprising a rotary upper drum and a stationary lower drum (1) and provided with a drum base (2), the drum base (2) and the lower drum are joined together to form a lower drum assembly by means of which the drum can be arranged in a predetermined manner on a tape deck chassis of the recorder inclusively a tilt angle with regard to a tape deck chassis' plane, **characterized in that** the drum base (2) and the lower drum (1) are joined together by a welded joint at a certain area (F) of the lower drum assembly where the drum base (2) and the lower drum (1) abut.

2. The rotary drum according to claim 1, **characterized in that** that the drum base (2) and the lower drum (1) are joined together by welding with a laser beam (8).

3. The rotary drum according to claim 2, **characterized in that** the drum base (2) and the lower drum (1) are joined together by through-welding whereby the laser beam (8) is applied square to a looking-down surface of the drum base (2).

4. The rotary drum according to claim 3, **characterized in that** the looking-down surface of the drum base (2) is provided with regions (9) of reduced thickness where the laser beam (8) is to be applied.

5. The rotary drum according to claim 2, **characterized in that** the drum base (2) and the lower drum (1) are joined together by side-welding whereby the laser beam (8) is applied in a predetermined radial manner to get a welded joint at a certain area (F) at a circumference of the lower drum assembly where the drum base (2) and the lower drum (1) abut.

6. Apparatus according to a helical scan system for recording and/or reproducing signals onto/from a magnetic tape having a rotary drum according to claim 1.

## Patentansprüche

1. Drehtrommel für ein Bandaufzeichnungsgerät zum Aufzeichnen und/oder Wiedergeben von Signalen nach einem Schrägabtastungssystem, umfassend eine sich drehende obere Trommel und eine stationäre untere Trommel (1) und versehen mit einer Trommelbasis (2), wobei die Trommelbasis (2) und die untere Trommel miteinander verbunden sind, um einen unteren Trommelaufbau zu bilden, durch den die Trommel in einer vorbestimmten Weise einschließlich eines Neigungswinkels in Bezug auf eine Ebene der Bandgerätgrundplatte an einer Bandgerätgrundplatte des Aufzeichnungsgeräts angeordnet werden kann, **dadurch gekennzeichnet, dass** die Trommelbasis (2) und die untere Trommel (1) durch eine geschweißte Verbindung an einem bestimmten Bereich (F) des unteren Trommelaufbaus, wo die Trommelbasis (2) und die untere Trommel (1) aneinanderstoßen, miteinander verbunden sind.

2. Drehtrommel nach Anspruch 1, **dadurch gekennzeichnet, dass** die Trommelbasis (2) und die untere Trommel (1) durch Schweißen mit einem Laserstrahl (8) miteinander verbunden sind.

3. Drehtrommel nach Anspruch 2, **dadurch gekennzeichnet, dass** die Trommelbasis (2) und die untere Trommel (1) durch Durchschweißen miteinander verbunden sind, wobei der Laserstrahl (8) rechtwinkelig zu einer abwärtsblickenden Oberfläche der Trommelbasis (2) angelegt wird.

4. Drehtrommel nach Anspruch 3, **dadurch gekennzeichnet, dass** die abwärtsblickende Oberfläche der Trommelbasis (2) mit Bereichen (9) mit verringerter Dicke versehen ist, wo der Laserstrahl (8) angelegt werden soll.

5. Drehtrommel nach Anspruch 2, **dadurch gekennzeichnet, dass** die Trommelbasis (2) und die untere Trommel (1) durch Seitenschweißen miteinander verbunden sind, wobei der Laserstrahl (8) in einer vorbestimmten radialen Weise angelegt wird, um an einem bestimmten Bereich (F) an einem Umfang des unteren Trommelaufbaus, wo die Trommelbasis (2) und die untere Trommel (1) aneinanderstoßen, eine geschweißte Verbindung zu erhalten.

6. Vorrichtung nach einem Schrägabtastungssystem zum Aufzeichnen und/oder Wiedergeben von Signalen auf ein/von einem Magnetband, aufweisend eine Drehtrommel nach Anspruch 1.

## Revendications

1. Tambour rotatif pour un enregistreur à bande destiné à enregistrer et/ou reproduire des signaux selon un système à balayage hélicoïdal, comportant une tambour supérieur rotatif et un tambour inférieur fixe (1) et une base de tambour (2), cette dernière et le tambour inférieur sont réunis pour former un assemblage de tambour inférieur au moyen duquel le tambour peut être disposé de façon prédéterminée sur un châssis de platine de bande de l'enregistreur inclusivement selon un angle d'inclinaison par rapport à un plan du châssis de platine de la bande, **caractérisé en ce que** la base du tambour (2) et le tambour inférieur (1) sont réunis par un joint de soudure sur une certaine zone (F) de l'assemblage de tambour inférieur où la base du tambour (2) et le tambour inférieur (1) sont en butée.

2. Tambour rotatif selon la revendication 1, **caractérisé en ce que** la base du tambour (2) et le tambour inférieur (1) sont assemblés par soudage avec un faisceau laser (8).

3. Tambour rotatif selon la revendication 2, **caractérisé en ce que** la base du tambour (2) et le tambour inférieur (1) sont assemblés par un soudage traversant par lequel le faisceau laser (8) est appliqué perpendiculairement à une face vers le bas de la base du tambour (2).

4. Tambour rotatif selon la revendication 3, **caractérisé en ce que** la face vers le bas de la base du tambour (2) comporte des zones (9) d'épaisseur réduite auxquelles le faisceau laser (8) doit être appliqué.

5. Tambour rotatif selon la revendication 2, **caractérisé en ce que** la base du tambour (2) et le tambour inférieur (1) sont réunis par soudage latéral par lequel le faisceau laser (8) est appliqué d'une manière radiale prédéterminée pour obtenir un joint soudé au niveau d'une certaine zone (F) à la circonférence de l'assemblage du tambour inférieur où la base du tambour (2) et le tambour inférieur (1) sont en butée.

6. Appareil selon un système à balayage hélicoïdal d'enregistrement et/ou de reproduction de signaux sur/à partir d'une bande magnétique comportant un tambour rotatif selon la revendication 1.
